# EUROPEAN PATENT APPLICATION

(11) **EP 4 675 416 A1**
(43) Date of publication of application: **07.01.2026**
(21) Application number: 24781009.6
(22) Date of filing: 08.02.2024
(51) Int. Cl.: G06F 3/14, G06F 3/0484

(54) **DISPLAY DEVICE, AND METHOD FOR DISPLAYING MULTI-WINDOW SCREEN**

(30) Priority: 29.03.2023 KR 20230041114
(71) Applicant: Samsung Electronics Co., Ltd., Suwon-si, Gyeonggi-do 16677 (KR)
(72) Inventor: MOON, Jibum, Suwon-si Gyeonggi-do 16677 (KR); KIM, Yuyeong, Suwon-si Gyeonggi-do 16677 (KR); OH, Heungno, Suwon-si Gyeonggi-do 16677 (KR); KO, Heejin, Suwon-si Gyeonggi-do 16677 (KR); YOUN, Seokho, Suwon-si Gyeonggi-do 16677 (KR); LEE, Taehoon, Suwon-si Gyeonggi-do 16677 (KR); CHUNG, Wonsuk, Suwon-si Gyeonggi-do 16677 (KR)
(74) Representative: Appleyard Lees IP LLP
(86) International application number: PCT/KR2024/001922
(87) International publication number: WO 2024/205015

(57) **Abstract**

A display device according to one embodiment of the present disclosure comprises a memory, and one or more processors electrically connected to the memory, wherein the one or more processors can be configured to: display, on a display, a first multi-window screen including a plurality of windows; generate a second multi-window screen on the basis that a first input for adding a new window to the first multi-window screen or a second input for removing any one of the plurality of windows is received; and display the second multi-window screen on the display.

## Description

### [Technical Field]

The disclosure relates to a display device and a method for displaying a multi-window screen.

### [Background Art]

Multi-window technology refers to a technology that supports displaying various contents simultaneously on a single screen or allowing the user to perform different tasks. Multi-window technology is utilized in display devices such as monitors, smartphones, tablets, and televisions. A display device adopting multi-window technology may be capable of realizing high-performance image processing and decoding technologies because it processes various video streams simultaneously and may be equipped with an algorithm for applying the layout of a user-adaptive multi-window screen.

Currently, display devices are providing various functions such as executing various broadcast channels or applications or video calls using multi-window technology. Accordingly, users may obtain a home entertainment experience that allows them to perform various tasks simultaneously. A display device has a limited display area according to the form factor, and needs to provide various contents using the entire display area so that a portion of the display area is not wasted as a blank area.

### [Disclosure of Invention]

### [Solution to Problems]

The disclosure may provide a display device and a method for displaying a multi-window screen.

The disclosure may provide a display device and a method for displaying content input through various channels by the display device using a multi-window screen.

The disclosure may provide a display device and a method for displaying a multi-window screen capable of providing various multimedia content to a user by minimizing blank areas and maximizing the utilization of the display area.

A display device according to an embodiment of the disclosure may comprise memory and one or more processors electrically connected to the memory and including a processing circuit. The one or more processors may be configured to display a first multi-window screen including a plurality of windows on a display, generate a second multi-window screen based on receiving a first input for adding a new window to the first multi-window screen or a second input for removing any one of the plurality of windows, and display the second multi-window screen on the display. A layout of the first multi-window screen and the second multi-window screen may be determined based on configuration information associated with each of the first multi-window screen and the second multi-window screen. Each of the plurality of windows may correspond to any one of a responsive application window configured to allow a first aspect ratio of a first content area to be adjusted and a fixed application window configured to allow a second aspect ratio of a second content area to be fixed. The first aspect ratio of the first content area included in the responsive application window may be determined based on a third aspect ratio of the responsive application window.

A method for displaying a multi-window screen by a display device according to an embodiment of the disclosure may comprise displaying a first multi-window screen including a plurality of windows on a display, generating a second multi-window screen based on receiving a first input for adding a new window to the first multi-window screen or a second input for removing any one of the plurality of windows, and displaying the second multi-window screen on the display. A layout of the first multi-window screen and the second multi-window screen may be determined based on configuration information associated with each of the first multi-window screen and the second multi-window screen. Each of the plurality of windows may correspond to any one of a responsive application window configured to allow a first aspect ratio of a first content area to be adjusted and a fixed application window configured to allow a second aspect ratio of a second content area to be fixed. The first aspect ratio of the first content area included in the responsive application window may be determined based on a third aspect ratio of the responsive application window.

### [Advantageous Effects]

A display device according to an embodiment of the disclosure may minimize the involvement of blank areas that may be included in the display area by identifying the properties of an application (e.g., a responsive application or a fixed application) and adjusting the aspect ratio of the layout and content area according to the identification result. Accordingly, the user may obtain an enhanced user experience by maximizing the utilization of the display area.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIG. 1 is a view illustrating a configuration of a display device according to an embodiment of the disclosure;
FIG. 2 is a view illustrating a configuration of a display system including a display device and a media box according to an embodiment of the disclosure;
FIG. 3 is a reference view illustrating various source devices providing media content to a display device and the transmission/reception relationship between the various source devices and the display device according to an embodiment of the disclosure;
FIG. 4 is a flowchart illustrating a method for displaying a multi-window screen by a display device according to an embodiment of the disclosure;
FIG. 5 is a flowchart illustrating a method for displaying a multi-window screen by a display device according to an embodiment of the disclosure;
FIG. 6 is a flowchart illustrating a method for displaying a multi-window screen using a multi-view application, a responsive application, and a fixed application by a display device according to an embodiment of the disclosure;
FIGS. 7 and 8 are views illustrating examples of displaying a multi-window screen according to the addition of an application window according to an embodiment of the disclosure;
FIG. 9 is a flowchart illustrating a method for mapping a plurality of responsive applications to a layout by a display device according to an embodiment of the disclosure;
FIG. 10 is a view illustrating an example of displaying a multi-window screen including a plurality of responsive applications according to an embodiment of the disclosure;
FIG. 11 is a flowchart illustrating a method for displaying a multi-window screen where the aspect ratio of the content is switched by a display device according to an embodiment of the disclosure; and
FIG. 12 is a view illustrating an example of displaying a multi-window screen when the aspect ratio of the content is switched during the display of a multi-window screen according to an embodiment of the disclosure.

Reference may be made to the accompanying drawings in the following description, and specific examples that may be practiced are shown as examples within the drawings. Other examples may be utilized and structural changes may be made without departing from the scope of the various examples.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

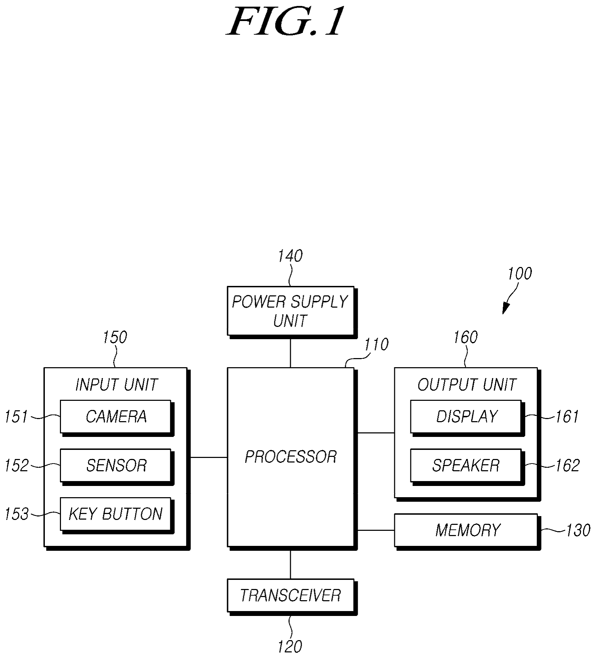

FIG. 1 is a view illustrating a configuration of a display device according to an embodiment of the disclosure.

Referring to FIG. 1, the display device 100 may include at least some of a processor 110, a transceiver 120, memory 130, a power supply unit 140, an input unit 150, or an output unit 160. The processor 110 may be electrically connected to the transceiver 120, the memory 130, the power supply unit 140, the input unit 150, or the output unit 160, and may transmit commands or signals for controlling each electrically connected component. In the disclosure, each of the above-described components may be configured in the form of a circuit unit, or two or more components may be configured in the form of a single circuit unit.

The processor 110 may include storage and processing circuitry to support the operation of the display device 100. The storage and processing circuitry may include storage such as non-volatile memory (e.g., flash memory or another electrically programmable read-only memory (ROM) configured to form a solid-state drive (SSD)) and/or volatile memory (e.g., static or dynamic random access memory (RAM)). The processing circuitry in the processor 110 may be used to control the operation of the display device 100. The processing circuit unit may be based on one or more microprocessor(s), microcontroller(s), digital signal processor(s), baseband processor(s), power management section(s), audio chip(s), or application specific integrated circuit(s).

The transceiver 120 may include a wireless communication module or a radio frequency (RF) module. The wireless communication module may include communication circuitry for performing wireless communication such as wireless fidelity (Wi-Fi), Bluetooth, global positioning system (GPS), or near field communication (NFC). The wireless communication module may provide wireless communication functionality using radio frequencies. The wireless communication module may include a network interface or modem for connecting the display device 100 to a network (e.g., the Internet, a local area network (LAN), a wide area network (WAN), a telecommunication network, a cellular network, a satellite network, a plain old telephone service (POTS), or a 5G network). The RF module may include RF circuitry for transmitting/receiving data, e.g., RF signals or called electronic signals. The RF module may include a pulsed amplitude modulation (PAM), a frequency filter, or a low noise amplifier (LNA), but the disclosure is not limited thereto. The RF module may include components for transmitting/receiving electromagnetic waves over free space in wireless communication, but the disclosure is not limited thereto.

The memory 130 may include a memory area for the processor 110 to store variables used in the protocols, configurations, controls, and other functions of the display device 100, which correspond to or include any of the methods and/or procedures described illustratively. The memory 130 may include non-volatile memory, volatile memory, or a combination thereof. The memory 130 may be electrically connected to a memory slot that allows removable memory cards of one or more formats (e.g., Memory stick, compact flash) to be inserted or removed.

The power supply unit 140 may include a circuit unit and/or a circuit component that assists in the smooth operation by providing stable power to various electronic components constituting the display device 100. For example, the power supply unit 140 may include, but is not limited to, an alternating current (AC) input, a transformer, a rectifier, a filter capacitor, a voltage regulator, or a protection circuit, although not illustrated.

The input unit 150 may include an interface for interacting with the display device 100, or input devices for interacting with the display device 100. The display device 100 may, through the input unit 150, detect a user input or sense information of the surrounding environment.

The input unit 150 of the display device 100 may include various components, such as, e.g., a camera 151, a sensor 152, or key buttons 153. The camera 151 may obtain an image of the user or surrounding environment, and the obtained image may serve as a basis for interactions such as user motion or facial recognition, or recognition of changes in the surrounding environment. The sensor 152 may detect information from the surrounding environment and transfer the detected information to the processor 110 or the memory 130. The sensor 152 may include various types of sensors, such as an optical sensor, sound sensor, or temperature sensor, but the disclosure is not limited thereto. The key button 153 may include a component for controlling the display device 100 by being physically pressed or touched by the user. The user may execute various functions such as power control, volume adjustment, or channel change by operating the key button 153.

The input unit 150 of the display device 100 may convert detected user input or information of the surrounding environment into an electrical signal and transfer the same to the processor 110 of the display device 100. The processor 110 may perform appropriate operations based on the received electrical signal.

The output unit 160 may provide audio and visual information of the display device 100 to the user in the form of visible light or sound waves. The output unit 160 may include, e.g., a display 161 or a speaker 162, but the disclosure is not limited thereto. The display 161 may be manufactured in various ways, such as, e.g., a liquid crystal display (LCD), organic light emitting diode (OLED), or light emitting diode (LED). The display 161 may display images on the display screen. The speaker 162 may convert electrical signals into vibrations to vibrate the air, thereby generating sound. In the display device 100, visual information output through the display 161 and audio information output through the speaker 162 may be synchronized and output. Synchronization may be pre-configured in the content including audio and visual information, or may be configured by the display device 100 or another external device (e.g., a media box or settop box) functionally connected to the display device 100.

The display device 100 according to an embodiment of the disclosure may be various types of devices, such as a television, smartphone, tablet, smart watch, augmented reality (AR) glasses, extended reality (XR) glasses, virtual reality (VR) glasses, or head mount display (HMD), but is not limited to a specific type of device.

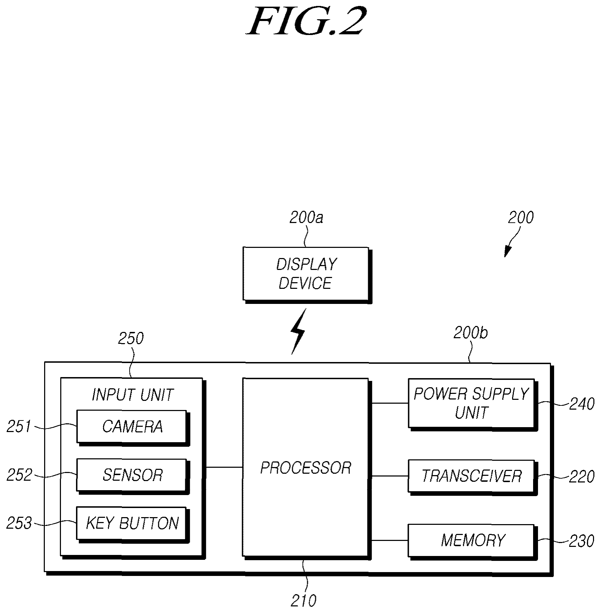

The processor 110 of the display device 100 according to an embodiment of the disclosure may be configured to execute various operations for displaying a multi-window screen, which is described below. Here, each operation may be executed at least entirely by the processor 110 included in the display device 100, but is not limited thereto, and may be executed at least partially by a processor included in the media box described with reference to FIG. 2.

Before describing the method for displaying a multi-window screen, a display system including the display device 100 and a media box is described with reference to FIG. 2.

FIG. 2 is a view illustrating a configuration of a display system including a display device and a media box according to an embodiment of the disclosure.

Referring to FIG. 2, a display system 200 may include a display device 200a and a media box 200b. The display device 200a and the media box 200b may be connected wiredly or wirelessly. For example, the display device 200a and the media box 200b may be electrically connected to each other, but the disclosure is not limited thereto. The display device 200a and the media box 200b may be functionally connected through a wireless interface after being disposed apart from each other. When the display device 200a and the media box 200b are not electrically connected to each other, the display device 200a and the media box 200b may be functionally connected based on various communication technologies. For example, the display device 200a and the media box 200b may wirelessly communicate with each other using various technologies such as Bluetooth, Wi-Fi, Wi-Fi Direct, ultra-wide band (UWB), or Miracast.

The media box 200b may stream multimedia content including video and/or audio to the display device 200a. The display device 200a may receive multimedia content based on the above-described electrical connection or wireless communication and may output the received multimedia content through an output unit such as a display or speaker.

To implement such functionality, the media box 200b may include at least one of a processor 210, a transceiver 220, memory 230, a power supply unit 240, or an input unit 250.

The processor 210 may include storage and processing circuitry to support the operation of the media box 200b. The storage and processing circuit unit may include storage, such as non-volatile memory (e.g., flash memory, or other electrically programmable ROM configured to form an SSD) and/or volatile memory (e.g., static or dynamic RAM). The processing circuit unit in the processor 210 may be used to control the operation of the media box 200b. The processing circuit unit may be based on one or more microprocessor(s), microcontroller(s), digital signal processor(s), baseband processor(s), power management section(s), audio chip(s), or application specific integrated circuit(s).

The transceiver 220 may include a wireless communication module or an RF module. The wireless communication module may include communication circuitry for performing wireless communication such as Wi-Fi, Bluetooth, GPS, or NFC. The wireless communication module may provide wireless communication functionality using radio frequencies. The wireless communication module may include a network interface or modem for connecting the media box 200b to a network (e.g., the Internet, LAN, WAN, communication network, cellular network, satellite network, POTS, or 5G network). The RF module may include RF circuitry for transmitting/receiving data, e.g., RF signals or called electronic signals. The RF module may include a PAM, a frequency filter, or an LNA, but the disclosure is not limited thereto. The RF module may include components for transmitting/receiving electromagnetic waves over free space in wireless communication, but the disclosure is not limited thereto.

The memory 230 may include a memory area for the processor 210 to store variables used in the protocols, configurations, controls, and other functions of the media box 200b, which correspond to or include any of the methods and/or procedures described illustratively. The memory 230 may include non-volatile memory, volatile memory, or a combination thereof. The memory 230 may be electrically connected to a memory slot that allows removable memory cards of one or more formats (e.g., Memory stick, compact flash) to be inserted or removed.

The power supply unit 240 may include a circuit unit and/or a circuit component that assists in the smooth operation by providing stable power to various electronic components constituting the media box 200b. For example, the power supply unit 240 may include, but is not limited to, an AC input, a transformer, a rectifier, a filter capacitor, a voltage regulator, or a protection circuit, although not illustrated.

The input unit 250 may include an interface for interacting with the media box 200b, or input devices for interacting with the media box 200b. The media box 200b may, through the input unit 250, detect a user input or sense information of the surrounding environment.

The input unit 250 of the media box 200b may include various components, such as, e.g., a camera 251, a sensor 252, or key buttons 253. The camera 251 may obtain an image of the user or surrounding environment, and the obtained image may serve as a basis for interactions such as user motion or facial recognition, or recognition of changes in the surrounding environment. The sensor 252 may detect information from the surrounding environment and transfer the detected information to the processor 210 or the memory 230. The sensor 252 may include various types of sensors, such as an optical sensor, sound sensor, or temperature sensor, but the disclosure is not limited thereto. The key button 253 may include a component for controlling the media box 200b by being physically pressed or touched by the user. The user may execute various functions such as power control, volume adjustment, or channel change by operating the key button 253.

The input unit 250 of the media box 200b may convert detected user input or information of the surrounding environment into an electrical signal and transfer the same to the processor 210 of the media box 200b. The processor 210 may perform appropriate operations based on the received electrical signal.

The media box 200b may transfer multimedia content, including video or audio, to a display device 200a without directly outputting it. The transfer of multimedia content may be performed by electrical connection or wireless communication between the display device 200a and the media box 200b. When the media box 200b transmits multimedia content to the display device 200a based on wireless communication, the media box 200b may transmit multimedia content to the display device 200a through one or more channels. Multimedia content transmitted through one channel may not be interfered with or intervened by multimedia content transmitted through another channel. Multimedia contents transmitted separately for each channel may be displayed on different windows on the display device 200a. For example, content #1 transmitted through channel #1 and content #2 transmitted through channel #2 may be displayed simultaneously on different windows. Such separate display on each window may be referred to as "divided and displayed on a window-by-window basis."

The media box 200b may be understood to form a single channel between display devices 200a, and the display device 200a and media box 200b according to an embodiment of the disclosure are not limited to forming the plurality of channels as described above.

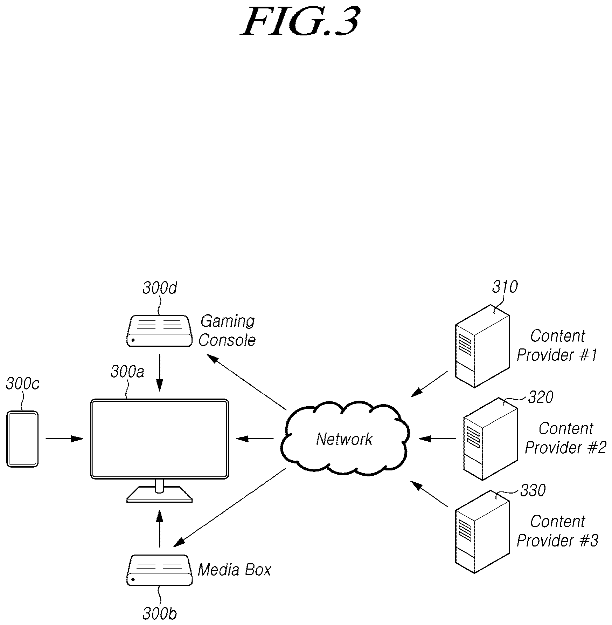

FIG. 3 is a reference view illustrating various source devices providing media content to a display device and the transmission/reception relationship between the various source devices and the display device according to an embodiment of the disclosure.

As described in FIG. 2, the display device 300a and the media box 300b may be functionally connected. Providing media content (or multimedia content), such as visual or audio information, to the display device 300a may not be limited to the media box 300b. For example, a gaming console 300d, a mobile device 300c (mobile equipment), or content provider(s) 310, 320, 330 functionally connected through a network may also provide media content to the display device 300a. The media content may be transmitted directly towards the display device 300a or may be transmitted to the display device 300a through a network (e.g., including a wireless network and a wired network) disposed between an external device (e.g., the gaming console 300d, the mobile device 300c, or content provider(s) 310, 320, 330) and the display device 300a.

Referring to FIG. 3, the gaming console 300d, media box 300b, mobile device 300c, or content provider(s) 310, 320, 330 may be connected to the display device 300a directly or through a network. Herein, the connection is understood to include not only a wired connection but also a wireless connection, and one or more other electronic devices (e.g., the media box 300b, gaming console 300d, etc.) may be positioned between the display device 300a and other devices as a relay for information transfer or processing.

The gaming console 300d, the media box 300b, the mobile device 300c, or the content provider(s) 310, 320, 330 (e.g., including a media server, web browser server, etc.) may be referred to as a "source device" in the following disclosure. The "source device" may represent a device that provides media content that may be output by the display device 300a. The source device is not limited to the gaming console 300d, the media box 300b, the mobile device 300c, or the content provider(s) 310, 320, 330, and may include various external devices that generate or transmit media content, such as a cable box or Blu-ray player.

The content provider(s) 310, 320, 330 may be server(s) that provide media content through a network. The content provider(s) 310, 320, 330 may be configured to provide different media contents, respectively. For example, assuming that the content provider includes a first content provider 310, a second content provider 320, and a third content provider 330, the first to third content providers 310, 320, 330 may provide different media contents, respectively. The first to third content providers 310, 320, 330 may be managed by different business entities, but are not limited thereto and may be managed by a single business entity.

The display device 300a may receive media content from a plurality of source devices and output the received content independently or simultaneously. The display device 300a may identify the source using embedded software. Herein, the source may be understood to mean a source device providing media content or a source application. The source may include a source device, satellite channel, cable channel, streaming application, gaming console 300d, or Blu-ray player, but the disclosure is not limited thereto. Once the source is identified, the display device 300a may allocate content to a window. The content may be individually allocated to one window, and when the display device 300a displays a multi-window screen composed of a plurality of windows, different contents may be allocated to different windows, respectively. The display device 300a may allocate content to windows to configure a multi-window screen. The display device 300a may provide content to the user by processing content provided by different sources individually or simultaneously, and the user may selectively use the content displayed on the multi-window screen by operating each window.

The display device 300a may include application(s) for receiving and outputting media content from the plurality of source devices. The disclosure refers to an application that executes media content as a media application. The media application may provide various media content. For example, the media application may include all types of applications available through the display device 300a, such as a broadcast channel, game, streaming service, over-the-top (OTT) service, or web browser. The term "application" mentioned in the disclosure may mean an application executable on the display device 300a, and the term "media application" may be included in the application.

The display device 300a may execute various applications, and the various applications may include a media application for outputting media content. The media application may include a broadcast channel application (e.g., Live TV), document processing application, streaming application, web browser, chat application, OTT application.

Various applications may be associated with different source devices. For example, a first application may be configured to execute media content provided by any one of the content providers, a second application may be configured to execute media content provided by the mobile device 300c, a third application may be configured to execute media content provided by the gaming console 300d, and a fourth application may be configured to execute media content provided by the media box 300b. Some of the various applications may also be associated with different input ports. For example, a specific application may be configured to execute media content input from various input ports for external input (e.g., high-definition multimedia interface (HDMI), display port (DP), digital visual interface (DVI), universal serial bus (USB)).

Various applications may be displayed across the entire display area of the display device 300a. For example, the media application executed by the display device 300a may display its execution screen across the entire display area. Such a displayed screen may be referred to as a single window screen.

Various applications may be displayed on a portion of the entire display area of the display device 300a. Among the various applications, two or more may be displayed simultaneously as a portion of the entire display area. For example, a first application may be mapped to a first window, and a second application may be mapped to a second window, so that the execution screens of the first application and the second application may be displayed as a multi-window screen including both the first window and the second window. As such, a screen in which execution screens of two or more applications are displayed simultaneously through windows that are area-wise separated from each other may be referred to as a multi-window screen.

The display device 300a that supports a multi-window screen may include a multi-view application for generating and displaying the multi-window screen. The multi-view application may be executed by user input, and the multi-window screen may be maintained while the multi-view application is executed, but various embodiments of the disclosure are not limited thereto.

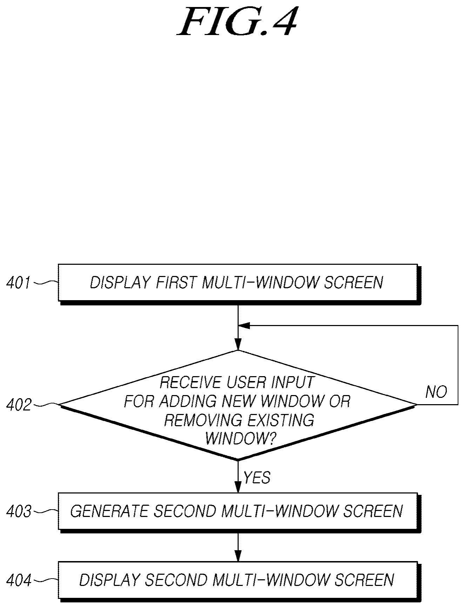

Hereinafter, according to various embodiments of the disclosure, a method for displaying a multi-window screen by a display device and its implementation example are described with reference to FIGS. 4 to 12.

FIG. 4 is a flowchart illustrating a method for displaying a multi-window screen by a display device according to an embodiment of the disclosure.

Each operation illustrated in FIG. 4 may be performed by the display device described above with reference to FIGS. 1 to 3. At least some of the operations illustrated in FIG. 4 may be performed by the source device illustrated in FIGS. 2 and 3, and the display device may function only as a display means for displaying the multi-window screen received from the media box. For convenience of description, the following operations are described as being performed by a processor, and the processor may be a processor included in the display device or the source device.

Referring to operation 401, the processor may display a first multi-window screen on the display. The first multi-window screen may be generated by a multi-view application and may include two or more windows.

Referring to operation 402, the processor may receive and detect a user input for adding a new window to the first multi-window screen or a user input for removing at least one of the windows constituting the first multi-window screen.

Referring to operation 403, the processor may generate a second multi-window screen based on receiving a user input for adding a new window to the first multi-window screen or a user input for removing at least one of the windows constituting the first multi-window screen.

The window(s) constituting the first multi-window screen and the second multi-window screen may be classified as either a responsive application window configured to adjust the aspect ratio of a content area or a fixed application window configured not to adjust the aspect ratio of the content area. As a responsive application is mapped to a window, the window to which the responsive application is mapped may be configured as a responsive application window. As a fixed application is mapped to a window, the window to which the fixed application is mapped may be configured as a fixed application window.

The responsive application may include an application capable of variably adjusting the aspect ratio of content, such as a document editing application, a web browser, or an OTT application. The fixed application may include an application with a fixed aspect ratio of content, such as a broadcast channel application or a screen sharing application.

The ratio of content provided by the fixed application is preset during content production, and the ratio of content that may be provided by the fixed application may be, e.g., a 4:3 ratio, a 16:9 ratio, a 21:9 ratio, or a 3:2 ratio.

The ratio of content provided by the responsive application may be determined based on the size and/or ratio of the content area where the content is to be displayed. For example, the ratio of content provided by the responsive application may be adjusted from 6:9 to 8:9 in response to the change of the content area ratio from 16:9 to 8:9. The adjustment of the content ratio is performed by the responsive application, and the multi-view application may request the responsive application to adjust the content ratio in response to the adjustment of the content area ratio, and the responsive application may provide the content with the adjusted ratio to the multi-view application, thereby achieving the adjustment of the content ratio.

The aspect ratio of the content area included in the responsive application window may be determined based on the aspect ratio of the responsive application window. In an example, the aspect ratio of the content area may be set to match the aspect ratio of the responsive application window. In an example, the aspect ratio of the content area may be set to be similar to the aspect ratio of the responsive application window. As such, as the aspect ratio of the content area and the aspect ratio of the responsive window match or become similar, the blank area that may be included in the responsive application window may be eliminated or minimized by extending the size of the content area while maintaining the ratio.

In an example, when the aspect ratio of the content area represented on the responsive application window does not match the aspect ratio of the responsive application window, the processor may adjust the aspect ratio of the content area to match the aspect ratio of the responsive application window.

In an example, when the aspect ratio of the content area represented on the responsive application window does not match the aspect ratio of the responsive application window, the processor may adjust the aspect ratio so that the content area fills the entire area of the responsive application window.

In an example, the aspect ratio of the responsive application window may be determined based on at least one of the number of windows constituting or included in the second multi-window screen, or the position where the responsive application window is disposed in the second multi-window screen.

The processor may maintain the aspect ratio of the responsive application window substantially the same regardless of the adjustment of the aspect ratio of the content area. Accordingly, the layout of the windows constituting the multi-window screen (e.g., the first multi-window screen, the second multi-window screen) is maintained the same, and the ratio of the content area included in the window may be independently adjusted.

The display device according to an embodiment of the disclosure may enhance the user's visual experience and immersion by maintaining the layout itself, which is the focus of the user's gaze, the same regardless of the type of content and, simultaneously, eliminate or minimize the blank area in the responsive application window defined by the layout, allowing for use of the display area of the display device without waste.

Without being limited thereto, when there is at least no blank area in the second multi-window screen, the content area(s) included in the responsive application window may be maintained in a default state without being extended. For example, the default state may be a state having a 16:9 ratio.

Referring to operation 404, the processor may display the generated second multi-window screen on the display. If the second multi-window screen is generated, the processor may replace the first multi-window screen with the second multi-window screen and display the same.

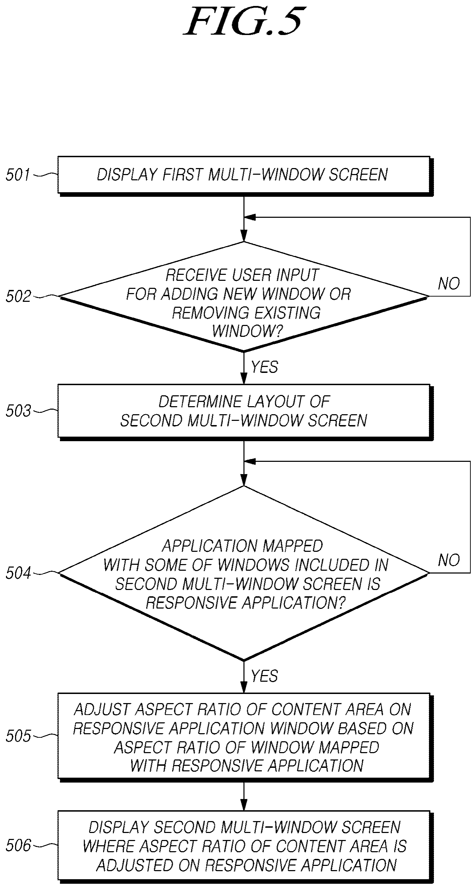

FIG. 5 is a flowchart illustrating a method for displaying a multi-window screen by a display device according to an embodiment of the disclosure.

Each operation illustrated in FIG. 5 may be performed by the display device described above with reference to FIGS. 1 to 3. Further, at least some of the operations illustrated in FIG. 5 may be performed by the source device illustrated in FIGS. 2 and 3, and the display device may function solely as a display means for displaying the multi-window screen received from the media box. For convenience of description, the following operations are described as being performed by the processor, which may be the processor provided in either the display device or the source device.

Referring to operation 501, the processor may display a first multi-window screen on the display. The first multi-window screen may be generated by a multi-view application and may include two or more windows.

Referring to operation 502, the processor may detect by reception a user input for adding a new window to the first multi-window screen or a user input for removing at least one of the windows constituting the first multi-window screen (or the windows included in the first multi-window screen).

Referring to operation 503, the processor may determine the layout of the second multi-window screen based on receiving a user input for adding a new window to the first multi-window screen or a user input for removing at least one of the windows constituting the first multi-window screen.

The layouts of the first multi-window screen and the second multi-window screen may be determined based on configuration information (first configuration information) associated with the first multi-window screen and configuration information (second configuration information) associated with the second multi-window screen, respectively. The first configuration information may be changed to the second configuration information in response to adding a new window to the first multi-window screen or deleting a window constituting the first multi-window screen. Hereinafter, for convenience of description, the principle by which the layout of the multi-window screen is determined is described using "configuration information" as a term encompassing the first configuration information and the second configuration information.

The configuration information may include at least one of the number of windows constituting the multi-window screen, form factor information, whether the responsive application window is present, and the position of the responsive application window.

In an example, a layout corresponding to the number of windows may be selected as the number of windows increases or decreases. The number of layouts corresponding to the number of windows is not limited to one, and two or more layouts may be selected.

The form factor information includes information about the form factor of a display product. The form factor information may also include information about the rotation state of the display device (rotation state information), and the information about the rotation state includes information about whether the rotatable display device is rotated so that the horizontally longer side is positioned or the vertically longer side is positioned.

In response to receiving a user input for adding a new window to the first multi-window screen or a user input for removing any one of the windows constituting the first multi-window screen, the processor may count the number of windows constituting the second multi-window screen and determine the layout of the second multi-window screen based on the configuration information.

By identifying the responsive application window, the processor may detect at least one of whether the responsive application window is present or the number of responsive application windows. The processor may detect the position of the responsive application window by identifying a window mapped with the responsive application or a window to be mapped with the responsive application.

In an example, each window may have location information associated therewith for identifying each window, and the processor may detect the position of the responsive application window using the location information associated with each window and application information mapped to each window.

Here, identifying the responsive application window may be performed after operation 502 and before operation 503 but, without limitations thereto, may also be performed periodically or continuously. In some cases, identifying the responsive application window may be configured not to be performed before operation 504.

The processor may determine different layouts for cases where there is the responsive application window and where there is no responsive application. In the responsive application window, as the blank area is minimized and the content area is configured to fill the responsive application window, the layout may be configured so that the responsive application window has a relatively larger size compared to the fixed application window.

Referring to operation 504, the processor may detect whether the application mapped to some of the windows constituting the second multi-window screen is the responsive application.

Referring to operation 505, the processor may adjust the aspect ratio of the content area on the responsive application window based on the aspect ratio of the window mapped with the responsive application.

In an example, the aspect ratio of the content area may be set to match the aspect ratio of the responsive application window. In an example, the aspect ratio of the content area may be set to be similar to the aspect ratio of the responsive application window. As such, as the aspect ratio of the content area and the aspect ratio of the responsive window match or become similar, the blank area that may be included in the responsive application window may be eliminated or minimized by extending the size of the content area while maintaining the ratio.

In an example, when the aspect ratio of the content area represented on the responsive application window does not match the aspect ratio of the responsive application window, the processor may adjust the aspect ratio of the content area to match the aspect ratio of the responsive application window.

In an example, when the aspect ratio of the content area represented on the responsive application window does not match the aspect ratio of the responsive application window, the processor may adjust the aspect ratio so that the content area fills the entire area of the responsive application window.

The aspect ratio of the responsive application window may be determined based on at least one of the number of windows constituting the second multi-window screen, or the position where the responsive application window is disposed in the second multi-window screen. For example, the layout may be determined according to the number of windows constituting the second multi-window screen, and the responsive application window may be disposed at a position of the layout. In this case, the aspect ratio of the responsive application window may be substantially the same as that defined based on the layout. Further, the layout may be determined according to, e.g., the number of windows constituting the second multi-window screen and the position where the responsive application is to be disposed, and the aspect ratio of the responsive application window may be substantially the same as the ratio defined by the layout.

The processor may maintain the aspect ratio of the responsive application window substantially the same regardless of the adjustment of the aspect ratio of the content area. Accordingly, the layout of the windows forming the multi-window screen (e.g., the first multi-window screen, the second multi-window screen) may remain the same, and the ratio of the content area included in the window may be adjusted independently. As such, the display device according to an embodiment of the disclosure may enhance the user's visual experience and immersion by maintaining the layout itself, which is the focus of the user's gaze, the same regardless of the type of content and, simultaneously, eliminate or minimize the blank area in the responsive application window defined by the layout, allowing for use of the display area of the display device without waste.

Referring to operation 506, the processor may display the second multi-window screen, in which the aspect ratio of the content area on the responsive application window is adjusted, on the display. If the second multi-window screen is generated, the processor may replace the first multi-window screen with the second multi-window screen and display the same.

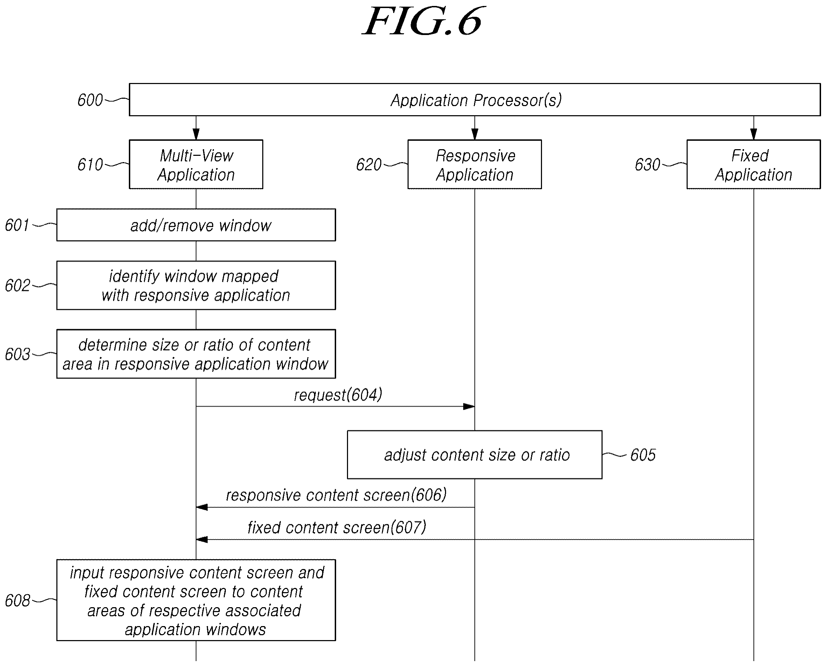

FIG. 6 is a flowchart illustrating a method for displaying a multi-window screen using a multi-view application, a responsive application, and a fixed application by a display device according to an embodiment of the disclosure.

Each operation illustrated in FIG. 6 may be performed by the display device described above with reference to FIGS. 1 to 3. Further, at least some of the operations illustrated in FIG. 6 may be performed by the source device illustrated in FIGS. 2 and 3, and the display device may function solely as a display means for displaying the multi-window screen received from the media box. For convenience of description, the following operations are described as being performed by the processor, which may be the processor provided in either the display device or the source device.

FIG. 6 illustrates that the processor 600 executes or controls the multi-view application 610, the responsive application 620, and the fixed application 630, but is not limited thereto, and some of the two or more processors 600 may execute or control the multi-view application 610, and the rest may execute or control the responsive application 620 and the fixed application 630. Further, the multi-view application 610, the responsive application 620, and the fixed application 630, respectively, may be executed or controlled by different processors 600. Here, the processors 600, which are distinguished from each other, may be provided in one display device or source device, or may be provided in different electronic devices (e.g., a display device or a source device). In the following description, for convenience of description, each operation is described as being performed by the applications (e.g., the multi-view application 610, the responsive application 620, and the fixed application 630), but it may be understood that each operation is substantially supported by one or more processors 600 executing or controlling each application.

Referring to FIG. 6, in operation 601, the multi-view application 610 may receive a user input for adding or deleting a window. The user input may be applied in various ways through the input unit. The method includes, e.g., touch input, remote control input, motion input, key button input, or the like, but is not limited to a specific method.

In operation 602, the multi-view application 610 may identify the window to which the responsive application 620 is mapped. The multi-view application 610 may manage the state of each window constituting the multi-window screen. The multi-view application 610 may identify whether the application mapped to each window constituting the multi-window screen is the responsive application 620 or the fixed application 630, and may control the display state of the multi-window screen based on the identification result.

In operation 603, the multi-view application 610 may determine the size or ratio of the content area in the responsive application 620 window. For example, the size or ratio of the content area may be adjusted to fill the entire area of the responsive application 620 window. For example, the ratio of the content area may be adjusted to match the ratio of the responsive application 620 window.

In operation 604, the multi-view application 610 may request the responsive application 620 to provide content whose ratio or size is adjusted. As the size and ratio of the content area are adjusted in operation 603, the multi-view application 610 may feed content related to or suitable for the adjusted content area to the content area. Accordingly, the multi-view application 610 may transmit the request, including information about the adjusted content ratio, to the responsive application 620 for the purpose of feeding appropriate content to the content area.

In operation 605, the responsive application 620 may adjust the size or ratio of the content to be provided to the multi-view application 610 in response to the request received from the multi-view application 610. In this case, the size or ratio of the content may match or correspond to the content area. For example, one or all of the horizontal width or vertical width of the content may match the content area.

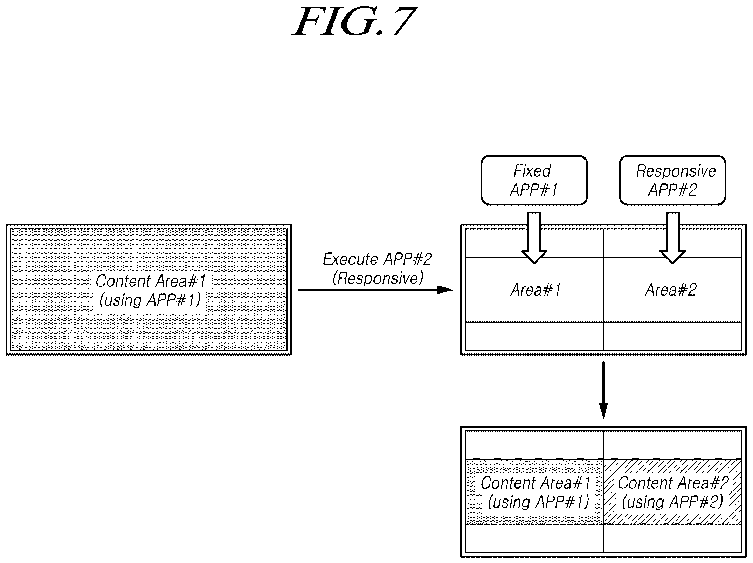

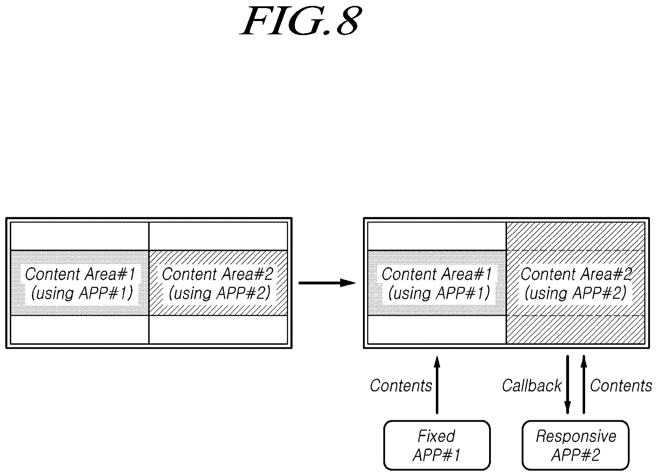

FIGS. 7 and 8 are views illustrating examples of displaying a multi-window screen according to the addition of an application window according to an embodiment of the disclosure.

Referring to FIG. 7, the display device may display content over content area #1. The content displayed in content area #1 may be provided from application #1 APP#1.

The display device may execute the multi-view application in response to the execution of a new application #2 APP#2. The multi-view application may generate and display a multi-window screen.

The multi-window screen may be divided into a left window corresponding to a left area and a right window corresponding to a right area. Assuming that application #1 is the fixed application and the newly executed application #2 is the responsive application, the left window may be mapped with the fixed application #1, and the right window may be mapped with the responsive application #2. Here, the left window may be referred to as the fixed application window mapped with the fixed application, and the right window may be referred to as the responsive application window mapped with the responsive application.

The left window and the right window may include at least partially area #1 and area #2, and blank areas may be formed above and below area #1 and area #2. No content is displayed in the blank area, and the display device represents the blank area in black. The aspect ratios of area #1 and area #2 may correspond to the form factor of the display device. For example, when the display device has a form factor of 16:9, the aspect ratios of area #1 and area #2 may initially be set to 16:9.

The display device may set area #1 as content area #1 and area #2 as content area #2. Content provided from application #1 may be fed to content area #1, and content provided from application #2 may be fed to content area #2.

Referring to FIG. 8, the display device may maintain the original state for the fixed application window and may at least extend the content area included in the responsive application window for the responsive application window. The content area included in the responsive application window may be extended to cover the blank areas positioned above and below. Accordingly, the blank area may be removed in the responsive application window.

The multi-view application of the display device may request (callback) content corresponding to the newly extended content area from the responsive application #2 to feed suitable content to the extended content area. The responsive application #2 may provide content corresponding to the newly extended content area #2 to the multi-view application. The multi-view application may feed the newly provided content to the extended content area #2 as requested. The newly provided content may have an adjusted size and ratio according to the size and ratio of the extended content area #2.

Although FIGS. 7 and 8 illustrate an example of adding windows, various embodiments of the disclosure are not limited thereto and may operate in substantially the same manner even when a window is removed from the multi-window screen. For example, when a window is removed, the multi-view application may identify whether the application mapped to the remaining windows is the responsive application or the fixed application in response to the removal of the window and may extend the content area to the blank area for the responsive application window mapped with the responsive application.

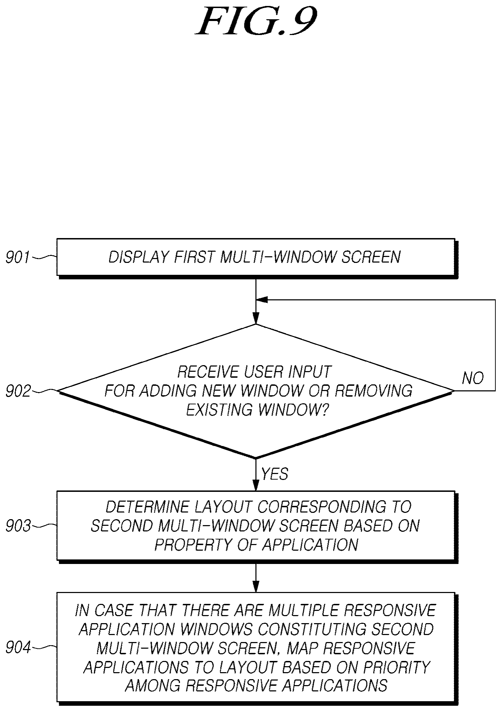

FIG. 9 is a flowchart illustrating a method for mapping a plurality of responsive applications to a layout by a display device according to an embodiment of the disclosure.

Each operation illustrated in FIG. 9 may be performed by the display device described above with reference to FIGS. 1 to 3. Further, at least some of the operations illustrated in FIG. 9 may be performed by the source device illustrated in FIGS. 2 and 3, and the display device may function solely as a display means for displaying the multi-window screen received from the media box. For convenience of description, the following operations are described as being performed by the processor, which may be the processor provided in either the display device or the source device.

Referring to operation 901, the processor may display a first multi-window screen on the display. The first multi-window screen may be generated by a multi-view application and may include two or more windows.

Referring to operation 902, the processor may receive and detect a user input for adding a new window to the first multi-window screen or a user input for removing at least one of the windows constituting the first multi-window screen.

Referring to operation 903, the processor may determine the layout corresponding to the second multi-window screen in response to receiving a user input for adding a new window to the first multi-window screen or a user input for removing at least one of the windows constituting the first multi-window screen. Here, the layout may be determined based on the properties of the application. In the disclosure, the properties of the application may be classified into the responsive application and the fixed application. The properties of the application may be detected by identifying the format of each application.

Referring to operation 904, when there are a plurality of responsive application windows constituting the second multi-window screen, the processor may map the responsive applications to the layout based on the priority among the responsive applications.

The layout determined according to operation 903 may include a plurality of windows. Here, the plurality of windows may have the same size and ratio, but in some cases, they may have different sizes and ratios. For example, in the case of a layout including three windows, two windows may have substantially the same size and ratio, while the remaining one may be relatively larger and have a different ratio. More specifically, in the case of a layout including three windows, it may include one window with an 8:9 ratio and two windows with a 16:9 ratio, and the window with the 8:9 ratio may have a substantially equal area to the combined area of the other two windows.

In this case, the processor should determine which of the plurality of reactive application windows to map to a relatively large-area window and relatively small-area windows. For convenience of description, hereinafter, the relatively large-area window is referred to as a large window, and the relatively small-area window is referred to as a small window. Here, the large window is set so that the vertical width is longer than the horizontal width, and the small window is set so that the horizontal width is longer than the vertical width. For example, the large window may have a ratio of 8:9, and the small window may have a ratio of 16:9.

The processor maps the reactive application with relatively higher priority to the large window, and the reactive application with relatively lower priority to the small window based on the priority among the reactive applications. As a result of such mapping, a second multi-window screen may be generated.

The priority may be preset for each application. For example, among the plurality of applications stored in the display device, the priorities relative to each other may be preset. The priority may be determined according to the user's usage history and the type of content provided through the application. For example, an application frequently used by the user may be set with relatively higher priority. For example, a web browser or a document processing application may be set with relatively higher priority compared to other applications providing videos.

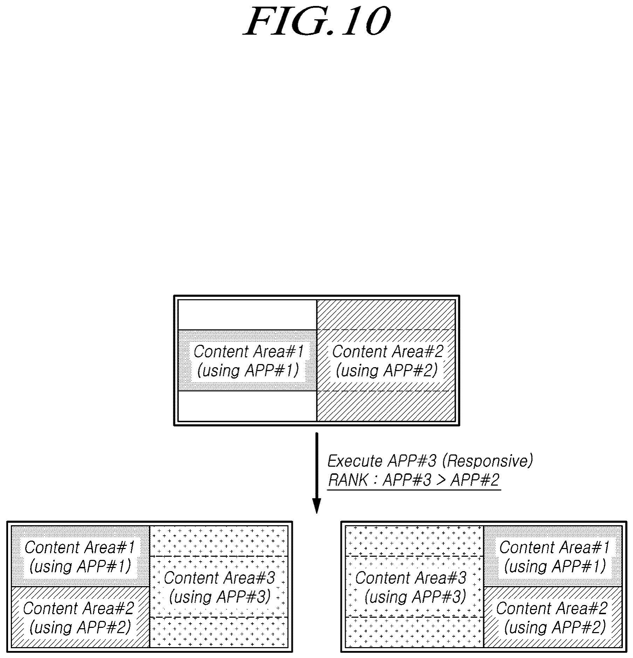

FIG. 10 is a view illustrating an example of displaying a multi-window screen including a plurality of responsive applications according to an embodiment of the disclosure.

FIG. 10, for the convenience of description, assumes a second multi-window screen including application #1, which is a fixed application, and application #2 and application #3, which are responsive applications, but various embodiments of the disclosure are not limited thereto.

Referring to FIG. 10, application #1 may be mapped to the left window (fixed application window) of the first multi-window screen, and application #2 may be mapped to the right window (reactive application window). The left window of the first multi-window screen includes blank areas and content area #1 positioned between the blank areas, and the right window includes content area #2 but, as content area #2 extends to the blank area, does not include blank areas.

As application #3 is newly executed while being displayed on the first multi-window screen, a second multi-window screen with a new application window corresponding to application #3 added is generated. The second multi-window screen includes three windows, which may include one large window and two small windows. The large window may be positioned on either the left side or right side, and the two small windows may be disposed in the remaining area except for the large window.

When the multi-window screen includes both the large window and the small windows, a reactive application may be mapped with higher priority to the large window, and the fixed application may be mapped with higher priority to the small windows. For example, when one of the three applications associated with the windows of the multi-window screen is a reactive application and the others are fixed applications, one reactive application may be mapped to the large window, and the remaining fixed applications may be mapped to the remaining small windows.

When two of the three applications associated with the windows of the multi-window screen are reactive applications and the other is the fixed application, the reactive application window with relatively higher priority may be mapped to the large window, and the reactive application window with relatively lower priority may be mapped to the small window according to the priority. Accordingly, based on the priority of reactive application #3 being set to be higher than that of reactive application #2, reactive application #3 may be mapped to the large window, and reactive application #2 may be mapped to the small window.

In the layout of a multi-window screen having an odd number of windows, a large window and small windows may be formed.

In an example, the position where the large window is formed may be determined based on the point designated by the user as the place to add the window of the newly executed application. If an input for adding an application window to the top left is applied by the user, small windows may be formed on the left side, and a large window may be formed on the right. If an input for adding an application window to the bottom left is applied by the user, small windows may be formed on the left, and a large window may be formed on the right. If an input for adding an application window to the top right is applied by the user, small windows may be formed on the right, and a large window may be formed on the left.

In an example, the position where the large window is formed may be determined based on the point designated by the user as the place to add the window of the newly executed application and the priority of the newly executed application. If the newly executed application has the highest priority and an input for adding the window of the application to the top left or bottom left is applied, a large window may be formed on the left, and small windows may be formed on the right. If the newly executed application has the highest priority and an input for adding the window of the application to the bottom right or top right is applied, small windows may be formed on the left, and a large window may be formed on the right.

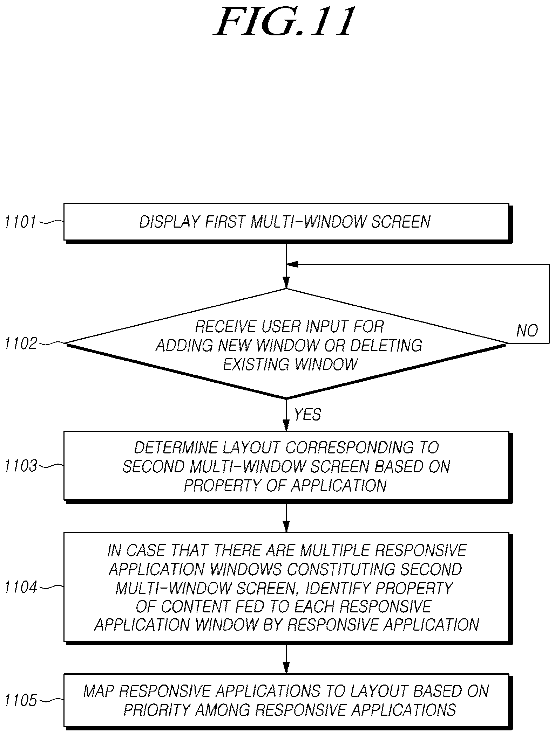

FIG. 11 is a flowchart illustrating a method for displaying a multi-window screen where the aspect ratio of the content is switched by a display device according to an embodiment of the disclosure.

Each operation illustrated in FIG. 11 may be performed by the display device described above with reference to FIGS. 1 to 3. Further, at least some of the operations illustrated in FIG. 11 may be performed by the source device illustrated in FIGS. 2 and 3, and the display device may function solely as a display means for displaying the multi-window screen received from the media box. For convenience of description, the following operations are described as being performed by the processor, which may be the processor provided in the display device or the source device.

Referring to operation 1101, the processor may display a first multi-window screen on the display. The first multi-window screen may be generated by a multi-view application and may include two or more windows.

Referring to operation 1102, the processor may receive and detect a user input for adding a new window to the first multi-window screen or a user input for removing at least one of the windows constituting the first multi-window screen.

Referring to operation 1103, the processor may determine the layout corresponding to the second multi-window screen in response to receiving a user input for adding a new window to the first multi-window screen or a user input for removing at least one of the windows constituting the first multi-window screen. Here, the layout may be determined based on the properties of the application. In the disclosure, the properties of the application may be classified into the responsive application and the fixed application. The properties of the application may be detected by identifying the format of each application.

The layout determined according to operation 1103 may include a plurality of windows. Here, the plurality of windows may have the same size and ratio, but in some cases, they may have different sizes and ratios. For example, in the case of a layout including three windows, two windows may have substantially the same size and ratio, while the remaining one may be relatively larger and have a different ratio. More specifically, in the case of a layout including three windows, it may include one window with an 8:9 ratio and two windows with a 16:9 ratio, and the window with the 8:9 ratio may have a substantially equal area to the combined area of the other two windows.

In this case, the processor should determine which of the plurality of reactive application windows to map to a relatively large-area window and relatively small-area windows. For convenience of description, hereinafter, the relatively large-area window is referred to as a large window, and the relatively small-area window is referred to as a small window. Here, the large window is set so that the vertical width is longer than the horizontal width, and the small window is set so that the horizontal width is longer than the vertical width. For example, the large window may have a ratio of 8:9, and the small window may have a ratio of 16:9.

Referring to operation 1104, when there are a plurality of responsive application windows constituting the second multi-window screen, the processor may identify the properties of the content fed to each responsive application window by the responsive application. The properties of the content may serve as a basis for determining the priority among the responsive applications.

The properties of the content may be classified into horizontal content and vertical content. The horizontal content is content set so that the horizontal width is longer than the vertical width, and the vertical content is content set so that the vertical width is longer than the horizontal width. The responsive application may provide both horizontal content and vertical content, and whether to provide either horizontal content or vertical content may be determined based on a user input. For example, if a user input for providing horizontal content is applied, the processor may provide horizontal content through the responsive application, and if a user input for providing vertical content is applied, the processor may provide vertical content through the responsive application.

When the content provided by the responsive application is vertical content, the processor may set a relatively high priority for the responsive application. When the content provided by the responsive application is horizontal content, the processor may set a relatively low priority for the responsive application.

Referring to operation 1105, the processor may map the responsive applications to the layout based on the priority among the responsive applications.

The processor may map the reactive application with relatively higher priority to the large window, and the reactive application with relatively lower priority to the small window based on the priority among the reactive applications. As a result of such mapping, a second multi-window screen may be generated. Specifically, the responsive application with relatively higher priority may provide vertical content as the multi-view application, and the multi-view application may represent the vertical content through the extended content area included in the large window. The responsive application with relatively lower priority may provide horizontal content as the multi-view application, and the multi-view application may represent the horizontal content through the content area included in the small window.

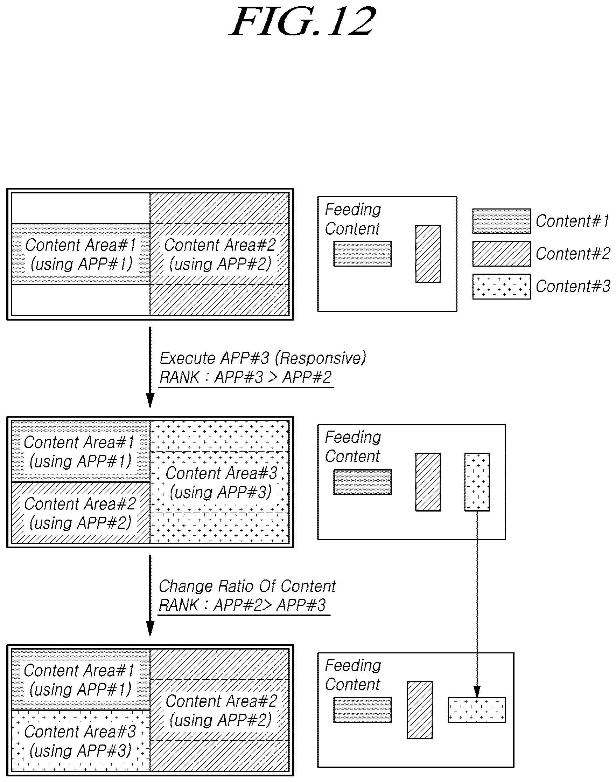

Accordingly, when the orientation of the content being output through any one of the responsive applications is switched from horizontal to vertical, or from vertical to horizontal, the processor may change the layout and the configuration of the second multi-window screen in response to the orientation (e.g., horizontal or vertical) switch of the content. Hereinafter, a substantial implementation form is described with reference to FIG. 12.

FIG. 12 is a view illustrating an example of displaying a multi-window screen when the aspect ratio of the content is switched during the display of a multi-window screen according to an embodiment of the disclosure.

FIG. 12, for the convenience of description, assumes a second multi-window screen including application #1, which is a fixed application, and application #2 and application #3, which are responsive applications, but various embodiments of the disclosure are not limited thereto.

Referring to FIG. 12, application #1 may be mapped to the left window (fixed application window) of the first multi-window screen, and application #2 may be mapped to the right window (reactive application window). The left window of the first multi-window screen may include blank areas and content area #1 positioned between the blank areas, and the right window may include content area #2 but, as content area #2 extends to the blank area, may not include blank areas.

As application #3 is newly executed while being displayed on the first multi-window screen, a second multi-window screen with a new application window corresponding to application #3 added is generated. The second multi-window screen includes three windows, which may include one large window and two small windows. The large window may be positioned on either the left side or right side, and the two small windows may be disposed in the remaining area except for the large window.

When the multi-window screen includes both the large window and the small windows, a reactive application may be mapped with higher priority to the large window, and the fixed application may be mapped with higher priority to the small windows. For example, when one of the three applications associated with the windows of the multi-window screen is a reactive application and the others are fixed applications, one reactive application may be mapped to the large window, and the remaining fixed applications may be mapped to the remaining small windows.

When two of the three applications associated with the windows of the multi-window screen are reactive applications and the other is the fixed application, the reactive application window with relatively higher priority may be mapped to the large window, and the reactive application window with relatively lower priority may be mapped to the small window according to the priority. Accordingly, based on the priority of reactive application #3 being set to be higher than that of reactive application #2, reactive application #3 may be mapped to the large window, and reactive application #2 may be mapped to the small window.

In an example, the position where the large window is formed may be determined based on the point designated by the user as the place to add the window of the newly executed application. If an input for adding an application window to the top left is applied by the user, small windows may be formed on the left side, and a large window may be formed on the right. If an input for adding an application window to the bottom left is applied by the user, small windows may be formed on the left, and a large window may be formed on the right. If an input for adding an application window to the top right is applied by the user, small windows may be formed on the right, and a large window may be formed on the left.

In an example, the position where the large window is formed may be determined based on the point designated by the user as the place to add the window of the newly executed application and the priority of the newly executed application. If the newly executed application has the highest priority and an input for adding the window of the application to the top left or bottom left is applied, a large window may be formed on the left, and small windows may be formed on the right. If the newly executed application has the highest priority and an input for adding the window of the application to the bottom right or top right is applied, small windows may be formed on the left, and a large window may be formed on the right.

The priority among the responsive applications may be reset based on a switch of the properties of the content provided from responsive application #3 mapped to the large window. For example, based on switching the content provided by responsive application #3 mapped to the large window from vertical content to horizontal content, the priority of responsive application #2 providing vertical content may be set to be higher than that of responsive application #3. As the priority is reset in this manner, responsive application #2 may be mapped to the large window, and responsive application #3 may be mapped to the small window.

The devices and methods according to various embodiments of the disclosure may be described as follows.

A display device according to an embodiment of the disclosure may comprise memory and one or more processors electrically connected to the memory and including a processing circuit. The one or more processors may be configured to: display a first multi-window screen including a plurality of windows on a display, generate a second multi-window screen based on receiving a first input for adding a new window to the first multi-window screen or a second input for removing any one of the plurality of windows, and display the second multi-window screen on the display. A layout of the first multi-window screen and the second multi-window screen may be determined based on configuration information associated with each of the first multi-window screen and the second multi-window screen. Each of the plurality of windows may correspond to one of a responsive application window configured to allow a first aspect ratio of a first content area to be adjusted or a fixed application window configured to allow a second aspect ratio of a second content area to be fixed. The first aspect ratio of the first content area included in the responsive application window may be determined based on a third aspect ratio of the responsive application window.

According to an embodiment, the one or more processors may , in case that the first aspect ratio does not match the third aspect ratio, adjust the first aspect ratio to match the third aspect ratio.

According to an embodiment, the one or more processors may, when the first aspect ratio does not match the third aspect ratio, adjust the first aspect ratio to allow the first content area to correspond to an entire area of the responsive application window.

According to an embodiment, the third aspect ratio may remain the same regardless of adjustment of the first aspect ratio.

According to an embodiment, a size of the responsive application window may remain the same regardless of adjustment of the first aspect ratio.

According to an embodiment, the configuration information associated with each of the first multi-window screen and the second multi-window screen may include at least one of a number of windows included in a corresponding multi-window screen, form factor information, whether the responsive application window is included in the corresponding window screen, or position information of the responsive application window.

According to an embodiment, the one or more processors may count the number of windows included in the second multi-window screen in response to receiving the first input or the second input, and determine a layout of the second multi-window screen based on the configuration information associated with the second multi-window screen.

According to an embodiment, the third aspect ratio may be determined based on at least one of a number of windows included in the second multi-window screen, or a position where the responsive application window is disposed in the second multi-window screen.

According to an embodiment, the first aspect ratio may be determined based on a fourth aspect ratio of the first content configured by a responsive application mapped to the responsive application window.

According to an embodiment, the second aspect ratio of the second content area included in the fixed application window may be determined based on a fifth aspect ratio of a second content received through a fixed application mapped to the fixed application window.

According to an embodiment, the one or more processors may adjust the first aspect ratio in response to receiving, from the responsive application, a message indicating that the fourth aspect ratio is changed. The adjusted first aspect ratio may match the changed fourth aspect ratio.

A method for displaying a multi-window screen by a display device according to an embodiment of the disclosure may comprise displaying a first multi-window screen including a plurality of windows on a display, generating a second multi-window screen based on receiving a first input for adding a new window to the first multi-window screen or a second input for removing any one of the plurality of windows, and displaying the second multi-window screen on the display. A layout of the first multi-window screen and the second multi-window screen may be determined based on configuration information associated with each of the first multi-window screen and the second multi-window screen. Each of the plurality of windows may correspond to one of a responsive application window configured to allow a first aspect ratio of a first content area to be adjusted or a fixed application window configured to allow a second aspect ratio of a second content area to be fixed. The first aspect ratio of the first content area represented on the responsive application window may be determined based on a third aspect ratio of the responsive application window.

According to an embodiment, generating the second multi-window screen may include, in case that the first aspect ratio does not match the third aspect ratio, adjusting the first aspect ratio to match the third aspect ratio.

According to an embodiment, generating the second multi-window screen may include, when the first aspect ratio does not match the third aspect ratio, adjust the first aspect ratio to allow the first content area to correspond to an entire area of the responsive application window.

According to an embodiment, the third aspect ratio may remain the same regardless of adjustment of the first aspect ratio.

According to an embodiment, a size of the responsive application window may remain the same regardless of adjustment of the first aspect ratio.

The electronic device according to various embodiments may be one of various types of electronic devices. The electronic devices may include, for example, a player, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., ROM, RAM, floppy disk, or hard disk) and an optically readable media (e.g., CD-ROM or DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A display device, comprising:
memory; and
one or more processors electrically connected to the memory and including a processing circuit, wherein the one or more processors are configured to:
display a first multi-window screen including a plurality of windows on a display;
generate a second multi-window screen based on receiving a first input for adding a new window to the first multi-window screen or a second input for removing any one of the plurality of windows; and
display the second multi-window screen on the display,
wherein a layout of the first multi-window screen and the second multi-window screen is determined based on configuration information associated with each of the first multi-window screen and the second multi-window screen,
wherein the plurality of windows comprises:
a responsive application window comprising a first content area having a first aspect ratio that is adjustable, and
a fixed application window comprising a second content area having a second aspect ratio that is fixed, and
wherein the first aspect ratio of the first content area included in the responsive application window is determined based on a third aspect ratio of the responsive application window.

2. The display device of claim 1, wherein the one or more processors are configured to, based on the first aspect ratio not matching the third aspect ratio, adjust the first aspect ratio to match the third aspect ratio.

3. The display device of claim 1 or 2, wherein the one or more processors are configured to, based on the first aspect ratio not matching the third aspect ratio, adjust the first aspect ratio so that the first content area corresponds to an entire area of the responsive application window.

4. The display device of any one of claims 1 to 3, wherein the third aspect ratio remains the same regardless of adjustment of the first aspect ratio.

5. The display device of any one of claims 1 to 4, wherein a size of the responsive application window remains the same regardless of adjustment of the first aspect ratio.

6. The display device of any one of claims 1 to 5, wherein the configuration information associated with each of the first multi-window screen and the second multi-window screen comprises at least one of a number of windows included in a corresponding multi-window screen, form factor information, whether the responsive application window is present, or position information of the responsive application window.

7. The display device of any one of claims 1 to 6, wherein the one or more processors are configured to:
based on receiving the at least one of the first input or the second input, count the number of windows included in the second multi-window screen; and
determine a layout of the second multi-window screen based on the configuration information associated with the second multi-window screen.

8. The display device of any one of claims 1 to 7, wherein the third aspect ratio is determined based on at least one of a number of windows included in the second multi-window screen or a position of the responsive application window in the second multi-window screen.

9. The display device of any one of claims 1 to 8, wherein the first aspect ratio is determined based on a fourth aspect ratio of the first content area configured by a responsive application mapped to the responsive application window.

10. The display device of any one of claims 1 to 9, wherein the second aspect ratio of the second content area included in the fixed application window is determined based on a fifth aspect ratio of a second content received through a fixed application mapped to the fixed application window.

11. The display device of claim 9, wherein the one or more processors are configured to adjust the first aspect ratio in response to receiving, from the responsive application, a message indicating that the fourth aspect ratio is changed, and
wherein the adjusted first aspect ratio matches the changed fourth aspect ratio.

12. A method for displaying a multi-window screen by a display device, the method comprising:
displaying a first multi-window screen including a plurality of windows on a display;
generating a second multi-window screen based on receiving a first input for adding a new window to the first multi-window screen or a second input for removing any one of the plurality of windows; and
displaying the second multi-window screen on the display,
wherein a layout of the first multi-window screen and the second multi-window screen is determined based on configuration information associated with each of the first multi-window screen and the second multi-window screen,
wherein the plurality of windows comprises:
a responsive application window comprising a first content area having a first aspect ratio that is adjustable, and
a fixed application window comprising a second content area having a second aspect ratio that is fixed, and
wherein the first aspect ratio of the first content area included in the responsive application window is determined based on a third aspect ratio of the responsive application window.

13. The method of claim 12, wherein generating the second multi-window screen includes, based on the first aspect ratio not matching the third aspect ratio, adjusting the first aspect ratio to match the third aspect ratio.

14. The method of claim 12 or 13, wherein generating the second multi-window screen includes, based on the first aspect ratio not matching the third aspect ratio, adjusting the first aspect ratio to allow the first content area to correspond to an entire area of the responsive application window.

15. The method of any one of claims 12 to 14, wherein the third aspect ratio or a size of the responsive application window remains the same regardless of adjustment of the first aspect ratio.
